# EUROPEAN PATENT APPLICATION

(11) **EP 0 978 479 A2**
(43) Date of publication of application: **09.02.2000**
(21) Application number: 98830018.2
(22) Date of filing: 19.01.1998
(51) Int. Cl.: C02F 1/62, C02F 1/52

(54) **Purification of waste water contaminated by heavy metals and other toxic substances**

(30) Priority: 17.03.1997 IT RM970151
(71) Applicant: Intelisano, Giuseppe, 00015 Monterotondo (Roma) (IT)
(72) Inventor: Intelisano, Giuseppe, 00015 Monterotondo (Roma) (IT)

(57) **Abstract**

The system consists in the following formula:

**CaO + H**_{**2**}**O = Ca(OH)**_{**2**} **+ 15,100 cal.**

with an adequate addition of quantity of contaminated toxic and noxious waters also from metals in solution, with acceptable costs on the market and without contaminated residual reworks as the contaminated waters are transformed by liquids in insoluble solids incorporated in the lime without causing damage to the ambient.

## Description

The procedure is the following:
The invention consists of an accurate choice of the flux lime for the calcination; with the baking we obtain Ca/O + Co/₂.The hydroxide of calcium so obtained it appears in patches of white colour (quick-lime). We proceed to the transformation through the exothermic reaction (extinction), with industrial wasted water containing metals in solution and toxic and noxious products like: Chrome VI - Chrome III - Zinc - Copper Lead - Iron - Nickel - Manganese - Cadmium - Aluminium - Brass ect.

Quick-lime is transformed in Hydroxide of calcium Ca (OH)/₂, this operation occurs with a considerable heat development and then an evaporation of water like H2/O, therefore all metals and toxic, noxious products contained in the water fix themselves in the lime making it more compact. The lime putty, so obtained, mixed with inerts used in building such as pozzolana, sand, ect., is used to obtain the so called mortar of lime, used for plastering both for external and internal walls and other applications in building, the mortar obtained has been scattered on three tiles of 40 x 40 cm having a thickness of about 2,5 cm and placed in vertical to simulate the final position of the mortar on an external plaster, without any coating protection as normally needed; on the terminal part of the tiles a grip for drainage has been installed with an adequate inclination to permit collection of the test water in a container. The tiles have been sprayed with normal water using an electro automatic timer vaporiser, which has sprinkle nozzles, ventilated with two fans of approx. 40 cm of diameter; this test has been carried out for 24 hours a day continuously for 30 days and repeated on a cycle basis for a total of approx. 8 months, this period is equivalent, in real terms, of about 300 years; no phenomenon of rejection of the metals contained in the transformed water has been noticed.

**The system has been tested from the "Università di Messina Dipartimento di Igiene, Medicina Preventiva e Sanità Pubblica - R. De Blasi"**, the quench of lime with wasted industrial water and following mixture of the obtained putty as been carried out with pozzolana. In such way a mortar, which can strongly hold the heavy metals originally contained in the wasted water, is obtained.
In order to verify strength of such link and therefore the possibility that heavy metals become inert, cession tests have been carried out on the mortar in respect of solutions, even strongly acid, kept in contact with the same mortar.
Mortar has been reduced into flakes of plaster and crushed to reduce it in granules of reduced dimensions.

Three parts of flake of dry plaster, weighting 1 Kg. each, have been put in contact, in suitable glass containers, with 2 litres of different solutions.
The first was a watery solution with a 6,8 pH, the second was a watery solution brought at pH 2 using sulphuric acid and the third one was a watery solution brought at pH 2 using Hydrochloric acid.
The three mixtures have been shaken for three days then the three parts have been filtered and the determination of heavy metals has been carried out through spectrophotometry at atomic absorption.

Similar research has been effected on original industrial wasted water which has been used for the extinction of the lime. In fact the tests carried out have proved that even submitting the flake obtained from the mortar, to a drastic treatment of acid rains simulation there are no significant release of metals (the system doesn't produce either mud's or waters).

**In order to solve in an effective and final way** the purification of wasted waters with metals in solution and having a long experience in building trade I have considered the possibility to utilise the exothermic action:
**(Ca O + H**_{**2**}**O 0 Ca (OH)**_{**2**} **+ 15,100 cal.),** for the extinction of quicklime.

**The advantage of the invention consist in: the complete elimination** either of waters and mud's, it eliminates the risks of deposit in the dumping of the mud's strongly toxic and noxious caused from the mechanical pressure, atmosphere agents and rains, which permit the infiltration in the ground and of course the economic side due to the cost of the traditional purification of the water and transport of muds and their discharge into the dump.

**The traditional insolubility** of the toxic and noxious wasted waters is made through a treatment with known reagents which partially separates the contaminates from the waters with a notable quantity of mud's to discharge into the dumps.

## Claims

1. Choice of the limestone for the calcination with elevate baking in respect to the normal, permits a greater absorption of water for extinction.

2. The transformation through reaction with wated toxic and noxious waters, also from metals in solution.

3. The use in building industry

4. The rights of exploitation of the system and the exclusive sale.
